# EUROPEAN PATENT SPECIFICATION

(11) **EP 2 740 713 B1**
(45) Date of publication and mention of the grant of the patent: **17.12.2014**
(21) Application number: 13151389.7
(22) Date of filing: 16.01.2013
(51) Int. Cl.: C02F 3/00, C02F 3/30, C02F 101/16, C02F 3/34

(54) **Method for starting up and controlling a biological process for ammonium removal by the action of autotrophic bacteria in wastewater**
Verfahren zum Starten und Steuern eines biologischen Verfahrens zur Ammoniakbeseitigung durch Wirkung von autotrophen Bakterien in Abwasser
Procédé de démarrage et de commande d'un processus biologique d'élimination d'ammonium par l'action de bactéries autotrophes dans des eaux usées

(30) Priority: 07.12.2012 ES 201231912
(43) Date of publication of application: 11.06.2014
(73) Proprietor: FCC Aqualia, S.A., 28016 Madrid (ES); Universidade de Santiago de Compostela, 15782 Santiago de Compostela (a Coruña) (ES)
(72) Inventor: Vazquez Padín, José Ramón, 41005 Sevilla (ES); Fernández González, Roberto, 41005 Sevilla (ES); Campos Gómez, Jose Luis, 41005 Sevilla (ES); Mosquera Corral, Anuska, 41005 Sevilla (ES); Méndez Pampín, Ramón, 41005 Sevilla (ES)
(74) Representative: Ungria López, Javier

(56) References cited:
- Zaira Hernando ET AL: "EVALUATION OF DEAMMONIFICATION", Department of Land and Water Resources Engineering Royal Institute of Technology (KTH), 1 July 2010 (2010-07-01), pages 1-137, XP055058713, Stockholm, Sweden Retrieved from the Internet: URL:http://sjostad.ivl.se/download/18.4a08 c3cb1291c3aa80e80007377/1283198005876/LWR- EX-10-12.pdf [retrieved on 2013-04-08]
- SAMIK BAGCHI ET AL: "Alkalinity and dissolved oxygen as controlling parameters for ammonia removal through partial nitritation and ANAMMOX in a single-stage bioreactor", JOURNAL OF INDUSTRIAL MICROBIOLOGY & BIOTECHNOLOGY ; OFFICIAL JOURNAL OF THE SOCIETY FOR INDUSTRIAL MICROBIOLOGY, SPRINGER, BERLIN, DE, vol. 37, no. 8, 11 June 2010 (2010-06-11), pages 871-876, XP019809572, ISSN: 1476-5535
- S. E. VLAEMINCK ET AL: "Microbial resource management of one-stage partial nitritation/anammox", MICROBIAL BIOTECHNOLOGY, vol. 5, no. 3, 27 March 2012 (2012-03-27), pages 433-448, XP055058711, ISSN: 1751-7915, DOI: 10.1111/j.1751-7915.2012.00341.x
- MARI K H WINKLER ET AL: "Nitrate reduction by organotrophic Anammox bacteria in a nitritation/anammox granular sludge and a moving bed biofilm reactor", BIORESOURCE TECHNOLOGY, ELSEVIER BV, GB, vol. 114, 22 March 2012 (2012-03-22), pages 217-223, XP028422570, ISSN: 0960-8524, DOI: 10.1016/J.BIORTECH.2012.03.070 [retrieved on 2012-03-29]
- AHN ET AL: "Sustainable nitrogen elimination biotechnologies: A review", PROCESS BIOCHEMISTRY, ELSEVIER, NL, vol. 41, no. 8, 1 August 2006 (2006-08-01) , pages 1709-1721, XP025124812, ISSN: 1359-5113, DOI: 10.1016/J.PROCBIO.2006.03.033 [retrieved on 2006-08-01]
- VAN DER STAR ET AL: "Startup of reactors for anoxic ammonium oxidation: Experiences from the first full-scale anammox reactor in Rotterdam", WATER RESEARCH, ELSEVIER, AMSTERDAM, NL, vol. 41, no. 18, 20 September 2007 (2007-09-20), pages 4149-4163, XP022261616, ISSN: 0043-1354, DOI: 10.1016/J.WATRES.2007.03.044
- VAN HULLE S W H ET AL: "Engineering aspects and practical application of autotrophic nitrogen removal from nitrogen rich streams", CHEMICAL ENGINEERING JOURNAL, ELSEVIER SEQUOIA, LAUSANNE, CH, vol. 162, no. 1, 1 August 2010 (2010-08-01), pages 1-20, XP027135751, ISSN: 1385-8947 [retrieved on 2010-05-25]
- CHRISTENSSON M ET AL: "ANITA Mox - A BioFarm Solution for Fast Start-up of Deammonifying MBBRs", WEFTEC 2011, 2011, pages 265-282, XP008161267,
- JEANNINGROS Y ET AL: "Fast start-up of a pilot-scale deammonification sequencing batch reactor from an activated sludge inoculum", WATER SCIENCE & TECHNOLOGY, ELMSFORD, NY; US , vol. 61, no. 6 1 January 2010 (2010-01-01), pages 1393-1400, XP008161262, ISSN: 0273-1223, DOI: 10.2166/WST.2010.019 Retrieved from the Internet: URL:www.iwaponline.com/wst/06106/06/defaul t.htm [retrieved on 2013]
- MNICA FIGUEROA ET AL: "Is the CANON reactor an alternative for nitrogen removal from pre-treated swine slurry?", BIOCHEMICAL ENGINEERING JOURNAL, ELSEVIER, AMSTERDAM, NL, vol. 65, 20 March 2012 (2012-03-20), pages 23-29, XP028423633, ISSN: 1369-703X, DOI: 10.1016/J.BEJ.2012.03.008 [retrieved on 2012-03-30]
- VAZQUEZ-PADIN J R ET AL: "Treatment of anaerobic sludge digester effluents by the CANON process in an air pulsing SBR", JOURNAL OF HAZARDOUS MATERIALS, ELSEVIER, AMSTERDAM, NL, vol. 166, no. 1, 15 July 2009 (2009-07-15) , pages 336-341, XP026089112, ISSN: 0304-3894, DOI: 10.1016/J.JHAZMAT.2008.11.055 [retrieved on 2008-11-24]

## Description

### FIELD OF THE INVENTION

The present invention belongs to the area of treatment of wastewater having a biodegradable organic matter/nitrogen ratio lower than 2 kg biodegradable COD/kg N. These waters are characterized by high nitrogen content, such as discharges and wastewater, especially waters and urban discharges treated in wastewater treatment plants (WWTP), and more especially the liquid effluent from anaerobic digesters of the WWTPs, having a high concentration of ammonium as a result of said fermentation process. An example of a current that can be treated through this invention is the drainage of the digested sludge dehydration system in a sludge line of a WWTP.

### STATE OF THE ART

Nutrient removal (mainly nitrogen N and phosphorus P) in the wastewater is necessary to avoid the proliferation of algae or eutrophication of receiving waters. The discharge of these compounds is limited by the European Directive on urban wastewater and it is therefore necessary to carry out their disposal in the WWTPs. The drainage of the digested sludge dehydration system forms part of the return current and at present it is returned to the header of the treatment plant without any treatment. However, this current is the liquid current with the highest nitrogen load of the plant, and its load is equivalent to around 20% of the plant input load. The removal of nitrogen especially in this current improves the overall efficiency of the wastewater treatment plant in terms of nitrogen removal and energy efficiency.

### Nitrogen removal

The removal of the nitrogen present in urban wastewater and in much of the industrial waters is carried out traditionally through the combination of the biological processes of nitrification and denitrification. Nitrification is the ammonium oxidation to nitrite or nitrate. This process consists of two stages; the oxidation of ammoniacal nitrogen to nitrite and the subsequent oxidation of this to nitrate (equations [1] and [2]) and these are carried out by autotrophic ammonium oxidizing (AOB) and nitrite oxidizing (NOB) bacteria.

NH₄⁺ + 1.5 O₂ → NO₂⁻ + H₂O + 2 H⁺ [1]

NO₂⁻+ 0.5 O₂ →NO₃⁻ [2]

During denitrification the nitrate and nitrite formed are reduced to nitrogen gas under anoxic conditions, consuming organic matter (equation [3]). This process is carried out by denitrifying heterotrophic bacteria.

8NO₃⁻ + 5CH₃COOH→8HCO₃⁻ + 6H₂O + 2CO₂ + 4N₂ [3]

The conventional activated sludge units can be designed to remove nitrogen through assimilation and nitrification/denitrification when the following conditions are met:
- long sludge age to maintain the nitrifying bacteria (about 10 days at temperatures of 15 ºC).
- an oxygenation capacity of 4.7 kg O₂/kg N.
- a biodegradable COD/N ratio greater than 5 kg/kg. If that ratio is lower than 5 it is necessary to add an external carbon source, what makes the operation more expensive.

In recent years a new process has arisen for the treatment of water with a low biodegradable COD/N ratio: the Anammox process.

### Anammox Process

The Anammox process (Anaerobic Ammonium Oxidation) was discovered about 15 years ago in the Delft University of Technology (Netherlands) during the operation of a denitrifying pilot plant, treating wastewater of a yeast plant. This process is carried out by a group of autotrophic bacteria able to oxidize the ammonium to nitrogen gas using nitrite as electron acceptor (equation [4]), without the need to supply oxygen or organic matter:

NH₄⁺ + 1.32 NO₂⁻ + 0.066 HCO₃⁻ + 0.13 H⁺ → N₂ + 0.26 NO₃⁻ + 0.066 CH₂O_{0.5}N_{0.15} + 2 H₂O [4]

The bacteria that perform the Anammox process belong to the genus Planctomycetes, and their optimum temperature and pH are of 35ºC and 8.0, respectively. The productivity of these bacteria is low and their doubling time is high (10 days at 35°C). Due to this low growth rate, the start-ups of the reactors are lengthened in time, hence, it is necessary the operation of the process in reactors that have good biomass retention capacity. Another feature of these microorganisms is that their activity is inhibited in the presence of high concentrations of oxygen, nitrite or organic matter.

To be able to apply the Anammox process to the nitrogen removal of the wastewater is necessary to have an effluent with suitable concentrations of nitrite and ammonium. The ammonium is present in the effluent from sludge digesters while the nitrite can be generated by the previous oxidation of 50% of the ammonium to nitrite.

Two alternative configurations are possible to carry out the process of autotrophic nitrogen removal:
1) Processes in two stages: partial nitrification of 50% of the ammonium to nitrite in the first reactor that would feed a subsequent Anammox reactor (WO9807664 (A1)),
2) Joint execution of the two stages of the autotrophic nitrogen removal in a single reactor. This process has received different names:
   o CANON: Complete Autotrophic Nitrite-removal Over Nitrite;
   o OLAND: Oxygen Limited Nitrification Denitrification;
   o DEMON or DEAMON for deammonification, etc.

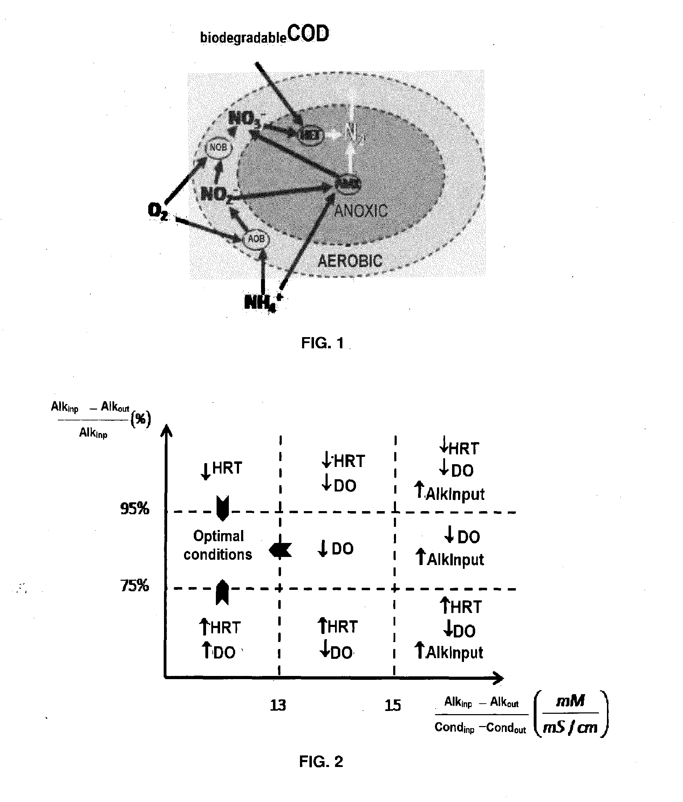

The biomass has to grow in the form of biofilm so that the partial nitrification process (aerobic reaction) and the Anammox process (anoxic reaction) happen in a single reactor. When it grows in such a way, a concentration gradient is created along said biofilm that allows having an aerobic zone, which is in contact with the aerated medium, and an innermost anoxic zone (see Figure 1).

Hernando, Z and Martinez, S ("Evaluation of Deammonification process performance for supernatant treatment", 2010) discloses experimental studies performed on an autotrophic nitrogen removal process named "deammonification", based on the operation of biological reactors where plastic carriers (KaldnesTM rings) are colonised by ammonia oxidizing bacteria and anammox bacteria. Laboratory and pilot scale operations were performed for a time period of 6 months in order to study the influence of different parameters of the process in the nitrogen removal efficiencies.

The present invention is proposed as an alternative to solve the problems detected in the field of the art related to the treatment of wastewater and the removal of the nitrogen they contain, and these are mainly:
1. slow start-up of the process due to the slow growth of the anammox bacteria,
2. how complicated it is to prevent the oxidation of nitrite to nitrate, an unwanted process and that may lead to the disappearance of the anammox bacteria from the system since they compete with these for the nitrite,
3. the low-efficiency of the same in terms of removing the residue because it is difficult to maintain high rates of removal in a sustainable manner over time,
4. the need to install devices as for example hydrocyclones for sludge selection, separation and purge (WO2011110905 (A1)).

This invention provides a start-up and control method of a process for removing nitrogen in a reactor called Autotrophic nitrogen removal wherein biofilms in which all processes occur simultaneously are going to be developed. In the reactor, the nitrification and denitrification processes both autotrophic and heterotrophic occur simultaneously inside the biofilm (Figure 1). By controlling the supply of an air stream containing oxygen to the reactor, the hydraulic residence time in the biological unit and the alkalinity at the reactor input it is possible to start-up the system in a few days and keep the operation steadily over time with nitrogen removal rates above 0.6 kg N/(m³ d).

### GENERAL DESCRIPTION OF THE INVENTION

The present invention is related to a method for starting up and controlling a biological process for removing nitrogen contained in wastewater through a combined stage of nitrification and anaerobic oxidation of ammonium ion (*Anammox*), in which an aerobic reaction of partial nitrification of the ammonium contained in the wastewater to nitrite with oxidizing bacteria and addition of oxygen, and a nitrogen production anoxic reaction with ammonium and nitrite autotrophic denitrifying bacteria, of the phylum Planctomycetes, take place at the same time, both bacterial populations being arranged in the form of biofilm in the same reactor such that the oxidizing bacteria are on the outside of the biofilm contacting an aerobic zone inside the reactor and the autotrophic bacteria are inside the biofilm creating an anoxic zone, characterized in that in the start-up and process operation the reactor containing the bacteria biofilm is fed with a wastewater flow for subsequently injecting a gas stream containing oxygen, as it may be an air stream, inside of it continuously until its shutdown, i.e. aeration is facilitated in the entire reaction stage, maintaining the dose of dissolved oxygen in the reactor at a level higher than 0.6 mg/l. In order to ensure the stability of the process, the air or oxygen supply to the reactor, the hydraulic residence time, the alkalinity and the conductivity are controlled such that the (Alkalinityᵢₙₚᵤₜ-Alkalinityₒᵤₜₚᵤₜ)/(Conductivity ᵢₙₚᵤₜ-Conductivityₒᵤₜₚᵤₜ) ratio is ideally kept below 13 mM/(mS/cm^{25°C}). In order to maintain a high efficiency of the process, the alkalinity at the output of the reactor must be between 5% and 25% of the alkalinity at the input of the same (see Figure 2).

Unlike other known processes for nitrogen removal, which are based on the idea that the amount of oxygen that is involved in the process must be controlled at low levels to facilitate denitrification of ammonium and nitrite, always below 0.5-0.6 mg O₂/l (WO2007033393 (A1); WO0005176 (A1)), the present invention demonstrates that it is possible to work with a high air or oxygen supply to the reactor, for example by maintaining aeration throughout the stage of reaction, in such a way that accelerating the start-up of the process is achieved.

In general, in the state of the art are used low concentrations of oxygen in the liquid medium to protect the anammox bacteria and prevent their inhibition by oxygen and/or nitrite, moreover this measure is an attempt to minimize the growth of the nitrite oxidizing bacteria since these, in general, have lower affinity for the oxygen than the ammonium oxidizing bacteria. However, the strategy that arises in the development of this invention consists of favoring the growth of the ammonium oxidizing bacteria since they produce a substrate necessary for the development of anammox bacteria: nitrite and also consume oxygen and therefore prevent the passage of it towards the inner anoxic layers of the biofilm.

The strategy of the start-up and control method consists of developing an ammonium oxidizing population, maintaining high concentrations of oxygen and lowering the hydraulic residence time (HRT) until nitrite is accumulated in the reactor, and is based on the inoculation with biomass containing anammox bacteria.

For the partial nitrification process (aerobic reaction) and the Anammox process (anoxic reaction) to take place at the same time in a single reactor, the biomass has to grow in the form of biofilm. By growing in this way, a concentration gradient is created along said biofilm that allows having an aerobic zone, the one that is in contact with the aerated medium, and an innermost anoxic zone. Bacterial growth in the form of aggregates or pellets should be promoted for the development of the biomass in the form of biofilm (controlling the hydrodynamic conditions in the reaction liquid medium; see Figure 1).

When working with biofilms, unlike the biomass in suspension, the transfer external to transport generates a boundary layer that causes the reduction of the concentration of oxygen on the surface of the biofilm and a concentration gradient is generated along the same. Therefore the concentrations measured in the liquid phase differ from the concentrations obtained inside the biofilm. Hence, this invention proposes controlling the process through ratios such as the Alkalinity_{consumed}/ΔConductivity ((Alkalinityᵢₙₚᵤₜ-Alkalinityₒᵤₜₚᵤₜ)/(Conductivityᵢₙₚᵤₜ-Conductivityₒᵤₜₚᵤₜ)) ratio. When working with biofilms, the matter transfer between the different phases (gas/liquid/solid) has a significant influence on the overall speed of each of the bacterial processes. The aforementioned Alkalinity_{consumed}/ΔConductivity ratio is the most relevant parameter when controlling the efficiency of the process, over parameters such as pH (WO2007033393 (A1)) or nitrite concentration (WO2011061084 (A1)) as it has been done so far.

It has been proven that the start-up and control method of the process described herein achieves the removal of the nitrogen fed in form of ammonium, which is contained in a wastewater current, in the form of gaseous nitrogen in percentages higher than 80%. In fact, when comparing this method with a conventional nitrification-denitrification process, it has been found that the first method consumes 60% less oxygen, does not require the presence of organic matter, emits less CO₂ and produces less than 10% of sludge than the second method.

To carry out the described method, ideally a system comprising a reactor in which biofilms will be developed wherein all the processes involved in the nitrogen removal occur simultaneously is used. In the reactor, the nitrification and denitrification processes both autotrophic and heterotrophic occur simultaneously inside the biofilm (See Figure 1). By controlling the supply of the gas stream with oxygen to the liquid medium, the hydraulic residence time and the Alkalinity_{consumed}/Δconductivity ratio it is possible to start-up the system in a few days and keep the operation steadily over time with nitrogen removal rates above 0.6 kg N/(m³ d).

For best performance of the process on which the start-up and control method is applied, this can be carried out (though not in an essential manner) in a reactor operated in discontinuous regime, i.e. the reactor operates in cycles that consist of different stages of feeding the reactor, aeration, decanting and emptying, before putting it back into operation. The system is equipped with a control system that allows choosing the duration of each of the stages that make up the operation cycle.

It is important to ensure high cell residence times in the reactor since the autotrophic bacteria have slow growth speed, especially the anammox bacteria with doubling times of around 10 days, and therefore this is the minimum value that must be guaranteed in the reactor. The separation of the biomass is done during the stage of sedimentation or decanting. The granules obtained in the process decant at high speed (speed exceeding 1 m/h) since they can have 1 or 2 mm in diameter which allows an optimal solid-liquid separation.

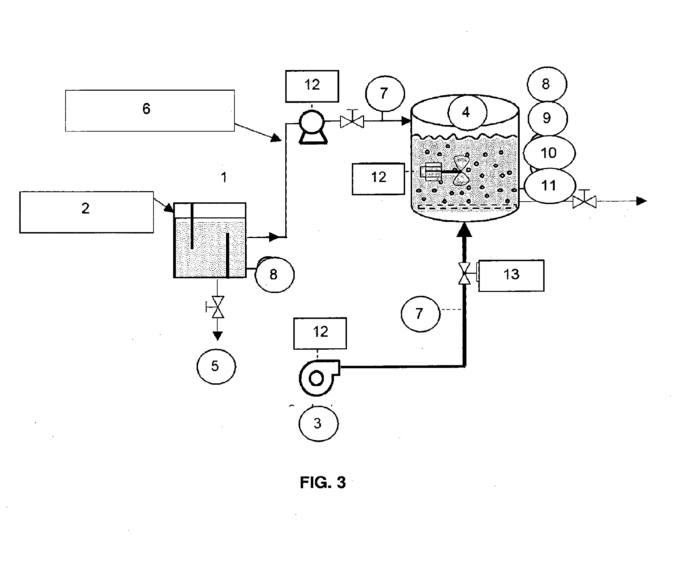

Different parameters in the treatment line must be measured and controlled to ensure a proper implementation of the process and these are mainly: alkalinity, conductivity of the liquid medium, concentration of dissolved oxygen in the reactor and HRT. The measurement of the concentrations of ammonium, nitrite and nitrate by means of selective electrodes is not recommended due to the high concentration of salts in the liquid medium, which prevents a reliable measurement of the ions in question. Said parameters are controlled through conventional means known in the field (Figure 3): flow meters for the determination of air and water flow rate, level meters, conductivity probes, dissolved oxygen probe, alkalinity external analyzer and air flow rate control valve. Through these elements and with various frequency inverters positioned on the feed and blower pump the oxygen/air supply to the reactor, the HRT, the alkalinity and the conductivity in the reactor can be easily regulated, the only parameters required for the control of the stability of the process.

Another object of the invention is the implementation of the method for starting up and controlling the ammonium removal process described herein in the purification of effluents from anaerobic digesters, such that it can be used in all those treatment plants (both municipal and industrial) wherein there is an anaerobic digester of this type. Specifically, the process can be applied to the treatment line of the return sludge or mud current of a WWTP. This current corresponds to the drainage of the output current of the anaerobic sludge digester, returning in the system to the beginning of the purification process.

### DETAILED DESCRIPTION OF THE INVENTION

In a particular embodiment of the method, the gas stream containing oxygen is an air stream. In another embodiment, the gas stream is a stream containing only oxygen.

Preferably, the granules that form the bacteria biofilm have a diameter comprised between 0.3 and 3.0 mm, including both limits. Also preferably, the biofilm grows on a support arranged inside the reactor.

Preferably, the gas flow rate containing oxygen, as it may be an air stream that is injected into the reactor is comprised between 20 and 100 m³ air/kg N_{removed}. Also preferably, the dose or concentration of dissolved oxygen maintained inside the reactor during the process is comprised between 0.6-4.0 mg/l. Also preferably, the concentration of dissolved oxygen is higher than 0.8 mg/l, so in the most preferred case said concentration is comprised between 0.8 mg/l and 4 mg/l.

The variables on which the present method can act are the concentration of dissolved oxygen, the hydraulic residence time (HRT) and the alkalinity/ammonium ratio (NH₄⁺) at the output of the reactor. When the parameter Alkalinity_{consumed}/ΔConductivity exceeds 13 mM/(mS/cm^{25°C}) and is between 13 and 15 corrective measures should be taken to restore the system to a stable state and such measures can be, preferably, to modify the supply of the gas stream with oxygen to the reactor and the HRT such that the reaction speed of the ammonium oxidizing bacteria is increased and the reaction speed of the nitrite oxidizing bacteria is reduced (see Figure 2). If this measure fails to restore the ratio to a value lower than 13 mM/(mS/cm^{25°C}) and if it even increases, for example above 15, then it is preferable and highly recommended to increase the alkalinity/NH₄⁺ ratio in the reactor to a value higher than or equal to 1 mmol IC/mmol N by adding an external source of alkalinity to the feed.

Preferably, the overall stoichiometry of the process object of protection, combining the partial nitrification with an *Anammox* stage, is the following:

NH₄⁺ + 0.80 O₂ + 1.11 HCO₃⁻→ 0.009 C₅H₇O₂N + 0.028 CH₂O_{0.15}N + 0.44 N₂ + 0.11 NO₃⁻ + 2.50 H₂O + 1.04 CO₂

The start-up and control method of the nitrogen removal process described herein can be carried out at a temperature comprised between 5°C and 40°C, and more preferably between 10 °C and 40 °C, including both limits, the more preferred temperature being of 30 °C.

Preferably, the method comprises in addition an initial stage of anoxic feed to ensure a heterotrophic nitrogen removal taking advantage of the biodegradable organic matter available in the water to be treated.

In an embodiment of the method, which adheres to what has been discussed in the essential process, first the feeding of the reactor with the wastewater flow is carried out, after which begins the injection of the gas stream containing oxygen, as it may be air, into the reactor (see Example 2). In another embodiment of the process, the wastewater flow feeding does not stop when the injection of the air stream begins, but it also continues during the entire aeration stage (see Example 1).

In a very preferred embodiment of the invention, the method also comprises a pretreatment stage of the wastewater flow used in the same, which consists of storing and laminating the water to be treated and decanting the suspended solids present in said water before entering the reactor.

In order to carry out the described method, ideally, a system formed by two units is used:
1. the reactor previously defined, connected at its input to
2. a homogenization tank equipped with baffles such and as shown in a preferred embodiment in Figure 3. This tank has two functions, on one hand to laminate the input flow and it also serves to decant the solids in suspension in the water to be treated since these solids are unwanted in the subsequent reactor.

Basically, the second unit consists of a buffer tank equipped with deflection screens such that the input of suspended solids into the reactor is minimal. This tank allows laminating the water flow to be treated, allowing the separation of the operation of this process from the global process in which it is integrated, as it may be with respect to the operation of the dehydration system of a WWTP plant. Its basic function is to ensure the supply of water to be treated in the reactor and it also allows removing decanted solids through the purge valve located at the bottom of the same.

The first unit is the reactor, which is preferably a batch granular reactor. Even more preferably, it is a reactor that is operated in cycles. The cycle is divided into the following stages: reactor feeding, operation through aeration and stop with decanting and emptying, before putting it back into operation.

The reactor operates preferably discontinuously such that the duration of the feeding stage can vary from 1 to 75% of the total cycle time. The duration of the first feeding phase in anoxic conditions is adjusted to promote an initial heterotrophic denitrification taking advantage of the nitrate formed in the previous cycle and it can be from 1 to 20% of the total cycle time. The aeration occupies the greater part of the cycle and occupies preferably 75% of the total cycle time. However, this duration can be adjusted and it may vary in terms of the aeration needs of the water to be treated.

The emptying and decanting time is set in function of the decanting speed required in the process; the minimum value for that speed is preferably of 1 m/h, such that all the floc/granule/particle that does not decant at that speed is removed from the system.

In short, when the process is carried out in a reactor operated in discontinuous regime, the reactor is operated in cycles, the duration of each cycle varying in function of the load to be treated, as well as of the length of each one of the stages of the cycle. An appropriate duration of the cycle can be for example of 6 hours.

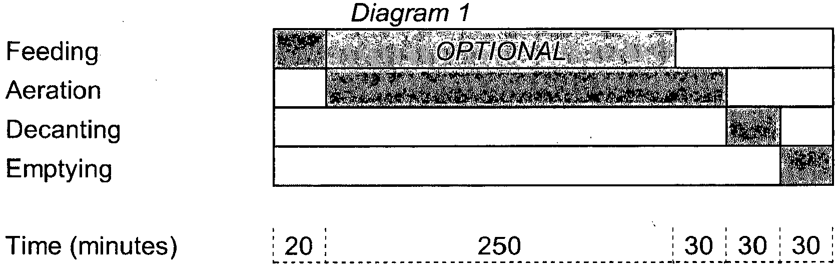

In a preferred 6 hours cycle, the feeding lasts between 5 and 270 minutes (from 1 to 75% of the cycle time). The cycle is preferably provided with an initial stage of anoxic feeding to ensure heterotrophic nitrogen removal by taking advantage of the biodegradable organic matter available in the water to be treated. Preferably, the injection of the gas stream containing the oxygen (for example, air) into the reactor has a duration greater than the feeding, such that an additional stage of aeration without feeding is set for the purposes of control of the process. In a 6-hour cycle, the total duration of air injection is a maximum of 280 minutes. Subsequently, the decanting and emptying of the reactor is carried out.

In a preferred embodiment, the data sent by the measuring probes of the parameters, which obviously in the preferred case including the pretreatment stage are also arranged in the unit designed for this purpose, are registered using a control system, thus optimizing the operation of the process to ensure the removal of a minimum of 80% of the nitrogen supplied. Preferably, the control of the method is automated. Based on the values recorded by the probes arranged in the reactor, the control system acts to optimize the operation of the plant on the feeding pump to the reactor and the blower.

As it has been said, preferably the wastewater flow is a current from an anaerobic digester. Even more preferably, said flow corresponds to a sludge drainage current of the return line of a purification plant WWTP. In another embodiment, the wastewater flow corresponds to the effluent from an anaerobic digester applied to industrial water in the canning sector.

### DESCRIPTION OF THE FIGURES

**Figure 1****.-** Illustrative diagram of a granule of the biofilm formed by the ammonium oxidizing bacteria (AOB) and the Anammox bacteria (AMX) inside the reactor, and its role in the partial nitrification and anaerobic ammonium oxidation processes. It can be seen as the oxidizing bacteria tend to be arranged on the exterior of the granule, in contact with the aerobic zone formed in the reactor as a result of the injection of air, while the Anammox bacteria are arranged in the interior of the granule, i.e. in the anoxic zone in which they produce nitrogen gas. The heterotrophic bacteria (HET) susceptible to eliminate part of the nitrate formed by the anammox bacteria when the effluent to be treated has biodegradable organic matter are also shown. Finally, the oxidation process of nitrite to nitrate carried out by nitrite oxidizing bacteria (NOB) is shown, which process must be avoided.
**Figure 2****.-** Corrective actions to return the system to the optimal operating conditions by acting on the following parameters: hydraulic residence time (HRT), supply of oxygen through the concentration of dissolved oxygen (DO) and alkalinity in the feed.
   These optimum operating conditions are defined by the following parameters: percentage of alkalinity removed during the process ((alkalinityinput-alkalinityoutput)/alkalinityinput) and the Alkalinityconsumed/ΔConductivity ratio. Control measures carried out are:
   a) Changing the dissolved oxygen (DO) concentration in the liquid medium:
      - Raising the DO concentration: When the percentage of alkalinity removed during the reaction is lower than 75% and the Alkalinityconsumed/ΔConductivity ratio is lower than 13 mM/(mS/cm25°C);
      - Lowering the DO concentration: When the Alkalinityconsumed/ΔConductivity ratio exceeds 13 mM/(mS/cm25°C);
   b) Modifying the hydraulic residence time (HRT):
      - Raising the HRT: When the percentage of alkalinity removed during the reaction is lower than 75%;
      - Lowering the HRT: When the percentage of alkalinity removed during the reaction is higher than 95%;
   c) Adding an external source of alkalinity:
      - Adding an external source of alkalinity to the inlet of the reactor when the Alkalinityconsumed/ΔConductivity ratio exceeds 15 mM/(mS/cm25°C).
**Figure 3****.-** Flow chart of the method in which the two tanks necessary to carry out the process, the homogenization and the reactor tank are outlined.
   1. Homogenization tank.
   2. Effluent from anaerobic digestion.
   3. Blower for injection of the air or oxygen stream.
   4. ELAN Reactor.
   5. Plant header.
   6. External alkalinity injection device (for example NaHC03).
   7. Flow rate sensor/indicator.
   8. Level sensor/indicator.
   9. Conductivity sensor/indicator.
   10. Oxygen sensor/indicator.
   11. Alkalinity meter.
   12. Frequency controller/inverter.
   13. Air stream injection control valve.

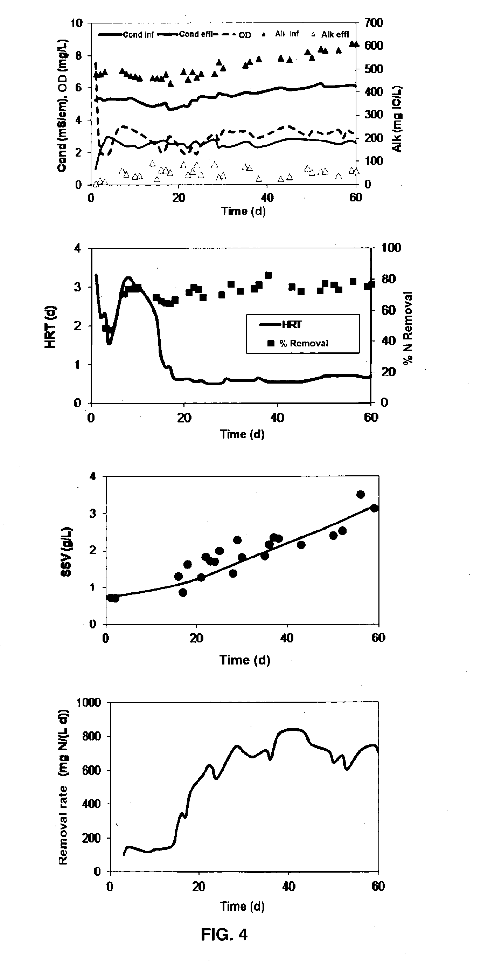

**Figure 4****.-** Evolution of the operational parameters during the start-up of the process of autotrophic nitrogen removal.
   - Figure 4 a): Evolution of the input (-) and output (-) conductivity, input (▲) and output (Δ) alkalinity and dissolved oxygen concentration in the reactor (---).
   - Figure 4 b): Evolution of the nitrogen removal percentage (▪) and the hydraulic residence time (HRT) (-) in the reactor.
   - Figure 4 c): Evolution of the volatile suspended solids concentration (SSV) in the reactor (•) with trendline.
   - Figure 4 d): Evolution of the nitrogen removal rate in the reactor.

### EXAMPLES

### Example 1. Start-up of the process of ammonium removal in a batch reactor installed in a municipal WWTP for treating the drainage from digested sludge dehydration centrifuges.

The start-up of a pilot plant operated in the Vigo municipal WWTP was carried out following the method described in the present invention, feeding the ELAN reactor in accordance with the following cycle:

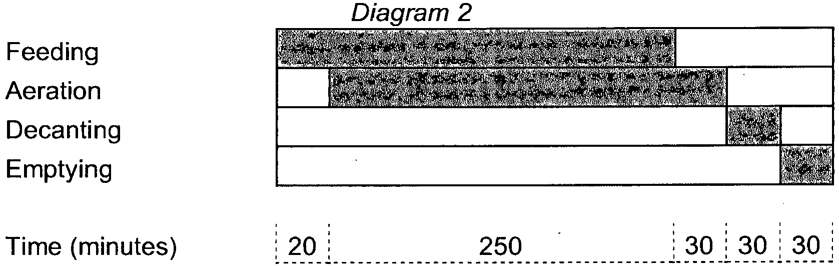

The ranges of concentrations obtained in the drainage of the digested sludge dehydration system measured in the liquid phase are detailed in Table 1:

**Table 1. Analysis of the drainage from the anaerobic sludge dehydration centrifuges.**

| Conductivity mS/cm | NH₄⁺ mg N/L | Alkalinity mM |
|---|---|---|
| 5.4-7.9 | 541 - 643 | 35-60 |

The concentration of dissolved oxygen during the entire cycle has remained between 2 and 4 mg/L, and the aeration has been kept for 75% of the cycle, in this way the start-up of the process has been accelerated. In just two months of operation, rates of nitrogen removal of 0.8 g N/(L d) have been achieved starting from virtually nil initial rates and the amount of biomass in the reactor has been multiplied by 5 (Figure 4).

This study therefore proved that it is possible to treat the return current of the sludge digester with a process of autotrophic nitrogen removal that combines the partial nitrification and Anammox processes in a unit on which the start-up and control method described herein is applied.

The operation of the method object of interest, in this case in a batch granular reactor, has several advantages over the process in two stages: a quick start-up, greater removal efficiency, greater simplicity and robustness of the treatment. The robustness is linked to bacterial growth in the form of biofilm, the most sensitive bacteria: anammox are protected by a layer of several hundred micrometers of ammonium oxidizing bacteria.

### Example 2.- Start-up and control of a nitrogen removal process of a sludge current of an anaerobic digester through the method object of the invention.

This example shows the application of the method object of the patent in the WWTP by Guillarei in Tui. In this case, the implemented cycle was the following:

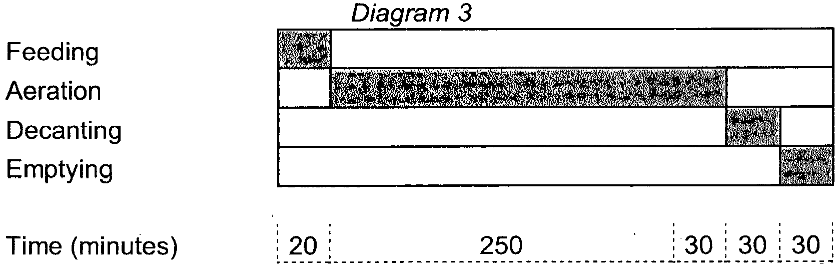

Table 2 shows the average operational data obtained during three months of operation by operating as described in the present invention. It is noted that the percentage of nitrogen removal was 82% without nitrite oxidation to nitrate.

**Table 2. Characterization of the input and output currents of the airlift reactor. Average values of three months of operation.**

| **Parameters measured in the reactor** | | |
|---|---|---|
| Reactor temperature | *°C* | 27 |
| Conductivityᵢₙₚᵤₜ | *mS*/*cm* | 9.2 |
| Conductivityₒᵤₜₚᵤₜ | *mSlcm* | 2.5 |
| Alkalinityᵢₙₚᵤₜ | *mg lC*/*L* | 973 |
| Alkalinityₒᵤₜₚᵤₜ | *mg lC*/*L* | 105 |
| Concentration of dissolved Oxygen | *mg*/*L* | 2.2 |
| HRT | *days* | 1.5 |
| Δalkalinity/Δconductivity | *mM*/*(mS*/*cm^{25°C})* | 11.8 |

| **Nitrogen balances** | | |
|---|---|---|
| NH₄ input | *mg N*/*L* | 1198 |
| NH₄ output | *mg NlL* | 139 |
| NO₂ output | *mg NlL* | 2 |
| NO₃ output | *mg NlL* | 79 |
| ΔN (nitrogen removal) | *mg N*/*(L d)* | 553 |
| Percentage of nitrogen removal | | 82% |

The control system proposed in the invention allowed the stable operation of the reactor during the operation of the same keeping nitrogen removal speeds of 0.6 kg N/(m³ d) and percentages of nitrogen removal higher than 80%.

## Claims

1. A method for starting up and controlling a biological process for removing nitrogen contained in wastewater through a combined stage of nitrification and anaerobic oxidation of ammonium ion, in which an aerobic reaction of partial nitrification of the ammonium contained in the wastewater to nitrite with oxidizing bacteria and addition of oxygen, and a nitrogen production anoxic reaction with ammonium and nitrite autotrophic denitrifying bacteria, of the phylum Planctomycetes, take place at the same time, both bacterial populations being arranged in the form of biofilm in the same reactor such that the oxidizing bacteria are on the outside of the biofilm contacting an aerobic zone inside the reactor, and the autotrophic bacteria are inside the biofilm creating an anoxic zone, **characterized in that**:
- in the start-up and operation of the process, the reactor containing the bacteria biofilm is fed with a wastewater flow for then injecting a gas stream containing oxygen inside of it continuously until its shutdown, maintaining the dose of dissolved oxygen in the reactor at a level higher than 0.6 mg/l, and
- during the process operation the supply of gas stream containing oxygen to the reactor, the hydraulic residence time, the alkalinity and the conductivity are controlled, such that the (Alkalinityᵢₙₚᵤₜ-Alkalinityₒᵤₜₚᵤₜ)/(Conductivityᵢₙₚᵤₜ-Conductivityₒᵤₜₚᵤₜ) ratio is kept under 13 mM/(mS/cm^{25°C}) and the alkalinity at the output of the reactor is kept between 5% and 25% of the alkalinity at the input, wherein:
when the (Alkalinityᵢₙₚᵤₜ-Alkalinityₒᵤₜₚᵤₜ)/(Conductivityᵢₙₚᵤₜ-Conductivityₒᵤₜₚᵤₜ) ratio exceeds 13 mM/(mS/cm^{25°C}) the supply of the gas stream containing oxygen to the reactor is decreased; and when the ratio is lower than 13 mM/(mS/cm^{25°C}) and the alkalinity at the output is greater than 25% of the alkalinity at the input then, the supply of the gas stream containing oxygen into the reactor is increased; and/or
when the alkalinity at the output is higher than 25% of the alkalinity at the input the hydraulic residence time is increased, and when the alkalinity at the output is lower than 5% of the alkalinity at the input then the hydraulic residence time is decreased.

2. The method according to claim 1, wherein the gas stream containing the oxygen is an air stream or a stream containing only oxygen.

3. The method according to any one of claims 1 or 2, wherein when the (Alkalinityᵢₙₚᵤₜ-Alkalinityₒᵤₜₚᵤₜ)/(Conductivityᵢₙₚᵤₜ-Conductivityₒᵤₜₚᵤₜ) parameter exceeds the value of 15 mM/(mS/cm^{25°C}), the alkalinity content is modified by adding an external source of alkalinity to the reactor feeding to increase the alkalinity/NH₄⁺ ratio in said reactor.

4. The method according to any one of the previous claims, wherein the bacteria are arranged in the biofilm in the form of granules.

5. The method according to any one of the previous claims, wherein the biofilm grows on a support arranged inside the reactor.

6. The method according to any one of the previous claims, wherein the flow rate of the gas stream containing oxygen that is injected into the reactor is comprised between 20 and 100 m³ air/kg N fed.

7. The method according to any one of the previous claims, wherein the concentration of dissolved oxygen maintained inside the reactor during the process is comprised between 0.6-4.0 mg/l.

8. The method according to any one of the previous claims, wherein the overall stoichiometry is the following:
NH₄⁺ + 0.80 O₂ + 1.11 HCO₃⁻ → 0.009 C₅H₇O₂N + 0.028 CH₂O_{0.15}N + 0.44 N₂ + 0.11 NO₃⁻ + 2.50 H₂O + 1.04 CO₂

9. The method according to any one of the previous claims, wherein the temperature inside the reactor is comprised between 5°C and 40°C, including both limits.

10. The method according to any one of the previous claims, wherein the reactor is a batch granular reactor.

11. The method according to any one of the previous claims, wherein after the shutdown of the reactor decanting and emptying of the same are carried out.

12. The method according to any one of the previous claims, wherein the injection of the gas stream containing oxygen into the reactor begins after feeding the reactor with the wastewater flow.

13. The method according to any one of claims 1 to 11, wherein the wastewater flow feeding continues during the entire action of injection of the gas stream containing oxygen into the reactor.

14. The method according to any one of the previous claims, wherein the stage of feeding the wastewater flow occupies from 1% to 75% of the reactor operation cycle.

15. The method according to any one of the previous claims, wherein the gas stream containing oxygen is supplied continuously during a period that occupies 75% of the operation cycle.

16. The method according to any one of the previous claims, wherein the wastewater flow is laminated, and the solids found in said flow are decanted and removed through a homogenization tank, before entering the reactor.

17. The method according to the previous claim, wherein the following parameters are controlled in the reactor by means of probes, measuring equipment and flow meters: concentration of dissolved oxygen, alkalinity, conductivity, wastewater flow rate, level, temperature and air/oxygen flow rate supplied.

18. The method according to any one of the previous claims, wherein at the beginning of the process part of the nitrate produced by the annamox bacteria is removed in a heterotrophic manner by carrying out a feeding under anoxic conditions, using the biodegradable organic matter available in the wastewater flow.

19. The method according to claim 17, wherein the measurement of the parameters is recorded through an automated control system, which acts on the hydraulic residence time, the air/oxygen supply to the reactor and the alkalinity at the reactor input.

20. The method according to any one of the previous claims, wherein the wastewater flow is a current from an anaerobic digester.

21. The method according to the previous claim, wherein the wastewater flow corresponds to a sludge drainage current of the return line of a WWTP purification plant.

22. The method according to claim 20, wherein the wastewater flow corresponds to the effluent from an anaerobic digester applied to industrial water in the canning sector.

## Patentansprüche

1. Verfahren zum Anfahren und Steuern eines biologischen Verfahrens zur Entfernung von in Abwasser enthaltenem Stickstoff durch eine kombinierte Stufe der Nitrifikation und anaeroben Oxidation von Ammoniumionen, bei der eine aerobe Reaktion einer partiellen Nitrifikation des im Abwasser enthaltenen Ammoniums zu Nitrit mit oxidierenden Bakterien und Zugabe von Sauerstoff, und eine Stickstoffproduktion durch anoxische Reaktion mit Ammonium und Nitrit denitrifizierenden autotrophen Bakterien des Stammes Planctomycetes, gleichzeitig stattfinden, wobei beide Bakterienpopulationen in Form eines Biofilms im gleichen Reaktor angeordnet sind, so dass die oxidierenden Bakterien auf der Außenseite des Biofilms sind, der eine aerobe Zone innerhalb des Reaktors kontaktiert, und die autotrophen Bakterien innerhalb des Biofilms unter Erzeugung einer anoxischen Zone sind, **dadurch gekennzeichnet, dass**:
- dem Reaktor, der den Bakterien-Biofilm enthält, beim Anfahren und Betrieb des Prozesses ein Abwasserstrom zugeführt wird, um dann in diesen kontinuierlich bis zur Abschaltung einen sauerstoffhaltigen Gasstrom zu injizieren, wobei die Dosis an gelöstem Sauerstoff in dem Reaktor bei einem Gehalt von mehr als 0,6 mg/l gehalten wird, und
- während des Prozessbetriebs die Zufuhr an sauerstoffhaltigem Gasstrom zu dem Reaktor, die hydraulische Verweilzeit, die Alkalinität und die Leitfähigkeit so gesteuert werden, dass das Verhältnis von (Alkalinität_{Eingang}-Alkalinität_{Ausgang})/(Leitfähigkeit_{Eingang}-Leitfähigkeit_{Ausgang}) unter 13 mM/(mS/cm^{25°C}) gehalten wird und die Alkalinität am Ausgang des Reaktors zwischen 5% und 25% der Alkalinität beim Eingang gehalten wird, wobei:
- wenn das Verhältnis von (Alkalinität_{Eingang}-Alkalinität_{Ausgang})/(Leitfähigkeit_{Eingang}-Leitfähigkeit_{Ausgang}) 13 mM/(mS/cm^{25°C}) übersteigt, die Zufuhr an sauerstoffhaltigem Gasstrom zu dem Reaktor verringert wird; und wenn das Verhältnis kleiner als 13 mM/(mS/cm^{25°C}) und die Alkalinität am Ausgang größer als 25% der Alkalinität am Eingang ist, die Zufuhr an sauerstoffhaltigem Gasstrom zu dem Reaktor erhöht wird; und/oder
- wenn die Alkalinität am Ausgang höher als 25% der Alkalinität am Eingang ist, die hydraulische Verweilzeit erhöht wird, und wenn die Alkalinität am Ausgang geringer als 5% der Alkalinität am Eingang ist, die hydraulische Verweilzeit verringert wird.

2. Verfahren nach Anspruch 1, wobei der sauerstoffhaltige Gasstrom ein Luftstrom oder ein nur sauerstoffhaltiger Strom ist.

3. Verfahren nach einem der Ansprüche 1 oder 2, wobei, wenn der Parameter (Alkalinität_{Eingang}-Alkalinität_{Ausgang})/(Leitfähigkeit_{Eingang}-Leitfähigkeit_{Ausgang}) den Wert von 15 mM/(mS/cm^{25°C}) übersteigt, der Alkalinitätsgehalt durch Zugabe einer externen Quelle von Alkalinität zu der Reaktoreinspeisung modifiziert wird, um das Verhältnis von Alkalinität/NH₄⁺ in dem Reaktor zu erhöhen.

4. Verfahren nach einem der vorhergehenden Ansprüche, wobei die Bakterien in dem Biofilm in Form von Granulat angeordnet sind.

5. Verfahren nach einem der vorhergehenden Ansprüche, wobei der Biofilm auf einem im Reaktor angeordneten Träger wächst.

6. Verfahren nach einem der vorhergehenden Ansprüche, wobei die Flussrate des sauerstoffhaltigen Gasstroms, der in den Reaktor injiziert wird, zwischen 20 und 100 m³ Luft/kg zugeführtem N liegt.

7. Verfahren nach einem der vorhergehenden Ansprüche, bei dem die Konzentration an gelöstem Sauerstoff, die während des Prozesses innerhalb des Reaktors aufrechterhalten wird, zwischen 0,6-4,0 mg/l liegt.

8. Verfahren nach einem der vorhergehenden Ansprüche, wobei die Gesamt-Stöchiometrie folgendermaßen ist:
NH₄⁺ + 0,80 O₂ + 1,11 HCO₃ → 0,009 C₅H₇O₂N + 0,028 CH₂O_{0,15}N + 0,44 N₂ + 0,11 NO₃ + 2,50 H₂O + 1,04 CO₂

9. Verfahren nach einem der vorhergehenden Ansprüche, wobei die Temperatur innerhalb des Reaktors zwischen 5°C und 40°C liegt, einschließlich der beiden Grenzwerte.

10. Verfahren nach einem der vorhergehenden Ansprüche, wobei der Reaktor ein diskontinuierlicher granulärer Reaktor ist.

11. Verfahren nach einem der vorhergehenden Ansprüche, wobei nach dem Abschalten des Reaktors ein Dekantieren und Entleeren desselben durchgeführt werden.

12. Verfahren nach einem der vorhergehenden Ansprüche, wobei die Injektion des sauerstoffhaltigen Gasstroms in den Reaktor nach der Beschickung des Reaktors mit dem Abwasserstrom beginnt.

13. Verfahren nach einem der Ansprüche 1 bis 11, wobei die Beschickung mit einem Abwasserstrom während der gesamten Injektionstätigkeit des sauerstoffhaltigen Gasstroms in den Reaktor fortdauert.

14. Verfahren nach einem der vorhergehenden Ansprüche, wobei die Stufe der Beschickung mit dem Abwasserstrom 1% bis 75% des Reaktorbetriebszyklus in Anspruch nimmt.

15. Verfahren nach einem der vorhergehenden Ansprüche, wobei der sauerstoffhaltige Gasstrom laufend während einer Zeitdauer, die 75% des Betriebszyklus in Anspruch nimmt, zugeführt wird.

16. Verfahren nach einem der vorhergehenden Ansprüche, bei dem der Abwasserstrom mehrschichtig ist, und die in dem Strom gefundenen Feststoffe mittels eines Homogenisierungstanks dekantiert und entfernt werden, bevor sie in den Reaktor eindringen.

17. Verfahren nach dem vorhergehenden Anspruch, wobei die folgenden Parameter in dem Reaktor mittels Sonden, Messgerät und Durchflussmessern gesteuert werden: Konzentration an gelöstem Sauerstoff, Alkalinität, Leitfähigkeit, Abwasserflussrate, Füllstand, Temperatur und zugeführte Luft-/Sauerstoffflussrate.

18. Verfahren nach einem der vorhergehenden Ansprüche, wobei bei Beginn des Prozesses ein Teil des von den Annamox-Bakterien produzierten Nitrats in einer heterotrophen Weise durch Durchführen einer Beschickung unter anoxischen Bedingungen entfernt wird, unter Verwendung des in dem Abwasserstrom vorhandenen, biologisch abbaubaren organischen Materials.

19. Verfahren nach Anspruch 17, wobei die Messung der Parameter durch ein automatisches Steuerungssystem aufgezeichnet wird, das auf die hydraulische Verweilzeit, die Luft-/Sauerstoffzufuhr zu dem Reaktor und die Alkalinität am Reaktoreingang einwirkt.

20. Verfahren nach einem der vorhergehenden Ansprüche, wobei der Abwasserstrom ein Strom aus einem anaeroben Faulbehälter ist.

21. Verfahren nach dem vorhergehenden Anspruch, wobei der Abwasserstrom einem Schlammentwässerungsstrom von der Rücklaufleitung einer Kläranlage entspricht.

22. Verfahren nach Anspruch 20, wobei der Abwasserstrom dem Abfluss aus einem anaeroben Faulbehälter entspricht, der für industrielles Wasser in der Konservenindustrie zum Einsatz kommt.

## Revendications

1. Procédé de démarrage et de contrôle d'un procédé biologique pour éliminer de l'azote contenu dans des eaux usées par une étape combinée de nitrification et d'oxydation anaérobie d'ion ammonium, dans lequel une réaction aérobie de nitrification partielle de l'ammonium contenu dans les eaux usées en nitrite avec des bactéries oxydantes et l'addition d'oxygène, et une réaction anoxique de production d'azote avec de l'ammonium et des bactéries dénitrifiantes autotrophes de nitrite, du phylum Planctomycetes, ont lieu simultanément, les deux populations bactériennes étant disposées dans la forme de biofilm dans le même réacteur de sorte que les bactéries oxydantes se trouvent sur l'extérieur du biofilm en contact avec une zone aérobie à l'intérieur du réacteur, et les bactéries autotrophes se trouvent à l'intérieur du biofilm créant une zone anoxique, **caractérisé en ce que** :
- dans le démarrage et l'opération du procédé, le réacteur contenant le biofilm de bactéries est alimenté en un écoulement d'eaux usées pour injecter ensuite un courant gazeux contenant de l'oxygène à l'intérieur de celui-ci en continu jusqu'à son arrêt, maintenant la dose d'oxygène dissous dans le réacteur à un niveau supérieur à 0,6 mg/l, et
- pendant l'opération de procédé l'introduction de courant gazeux contenant de l'oxygène dans le réacteur, le temps de séjour hydraulique, l'alcalinité et la conductivité sont contrôlés, de sorte que le rapport (alcalinité_{entrée}-alcalinitéₛₒᵣₜᵢₑ)/(conductivité_{entrée}-conductivitéₛₒᵣₜᵢₑ) est maintenu en-dessous de 13 mM/(mS/cm^{25°C}) et l'alcalinité à la sortie du réacteur est maintenue entre 5 % et 25 % de l'alcalinité à l'entrée, dans lequel :
- lorsque le rapport (alcalinité_{entrée}-alcalinitéₛₒᵣₜᵢₑ)/(conductivité_{entrée}-conductivitéₛₒᵣₜᵢₑ) excède 13 mM/(mS/cm^{25°C}) l'introduction du courant gazeux contenant de l'oxygène dans le réacteur est abaissée ; et lorsque le rapport est inférieur à 13 mM/(mS/cm^{25°C}) et l'alcalinité à la sortie est supérieure à 25 % de l'alcalinité à l'entrée, l'introduction du courant gazeux contenant de l'oxygène dans le réacteur est ensuite augmentée ; et/ou
- lorsque l'alcalinité à la sortie est supérieure à 25 % de l'alcalinité à l'entrée, le temps de séjour hydraulique est augmenté, et lorsque l'alcalinité à la sortie est inférieure à 5 % de l'alcalinité à l'entrée, le temps de séjour hydraulique est ensuite abaissé.

2. Procédé selon la revendication 1, dans lequel le courant gazeux contenant de l'oxygène est un courant d'air ou un courant contenant seulement de l'oxygène.

3. Procédé selon l'une quelconque des revendications 1 ou 2, dans lequel lorsque le paramètre (alcalinité_{entrée}-alcalinitéₛₒᵣₜᵢₑ)/(conductivité_{entrée}-conductivitéₛₒᵣₜᵢₑ) excède la valeur de 15 mM/(mS/cm^{25°C}), la teneur d'alcalinité est modifiée par addition d'une source externe d'alcalinité au réacteur d'alimentation pour augmenter le rapport alcalinité/NH₄⁺ dans ledit réacteur.

4. Procédé selon l'une quelconque des revendications précédentes, dans lequel les bactéries sont disposées dans le biofilm dans la forme de granulés.

5. Procédé selon l'une quelconque des revendications précédentes, dans lequel le biofilm croît sur un support disposé à l'intérieur du réacteur.

6. Procédé selon l'une quelconque des revendications précédentes, dans lequel le débit du courant gazeux contenant de l'oxygène qui est injecté dans le réacteur est compris entre 20 et 100 m³ d'air/kg de N introduit.

7. Procédé selon l'une quelconque des revendications précédentes, dans lequel la concentration d'oxygène dissous maintenu à l'intérieur du réacteur pendant le procédé est de 0,6-4,0 mg/l.

8. Procédé selon l'une quelconque des revendications précédentes, dans lequel la stoechiométrie globale est la suivante :
NH₄⁺ + 0,80 O₂+1,11 HCO₃⁻ → 0,009 C₅H₇O₂N + 0,028 CH₂O_{0,15}N + 0,44 N₂+0,11 NO₃⁻ + 2,50 H₂O + 1,04 CO₂

9. Procédé selon l'une quelconque des revendications précédentes, dans lequel la température à l'intérieur du réacteur est de 5°C à 40°C, comprenant les deux limites.

10. Procédé selon l'une quelconque des revendications précédentes, dans lequel le réacteur est un réacteur granulaire discontinu.

11. Procédé selon l'une quelconque des revendications précédentes, dans lequel après l'arrêt du réacteur une décantation et un vidage de celui-ci sont réalisés.

12. Procédé selon l'une quelconque des revendications précédentes, dans lequel l'injection du courant gazeux contenant de l'oxygène dans le réacteur commence après l'alimentation du réacteur en eaux usées.

13. Procédé selon l'une quelconque des revendications 1 à 11, dans lequel l'alimentation en écoulement d'eaux usées continue pendant l'action entière d'injection du courant gazeux contenant de l'oxygène dans le réacteur.

14. Procédé selon l'une quelconque des revendications précédentes, dans lequel l'étape d'alimentation en écoulement d'eaux usées occupe de 1 % à 75 % du cycle d'opération du réacteur.

15. Procédé selon l'une quelconque des revendications précédentes, dans lequel le courant gazeux contenant de l'oxygène est introduit en continu pendant une période qui occupe 75 % du cycle d'opération.

16. Procédé selon l'une quelconque des revendications précédentes, dans lequel l'écoulement d'eaux usées est rendu laminaire, et les matières solides trouvées dans ledit écoulement sont décantées et éliminées par l'intermédiaire d'un réservoir d'homogénéisation, avant d'entrer dans le réacteur.

17. Procédé selon la revendication précédente, dans lequel les paramètres suivants sont contrôlés dans le réacteur au moyen de capteurs, d'équipement de mesure et de débitmètres : concentration en oxygène dissous, alcalinité, conductivité, débit d'eaux usées, niveau, température et débit d'air/oxygène introduit.

18. Procédé selon l'une quelconque des revendications précédentes, dans lequel au début du procédé une partie du nitrate produit par la bactérie annamox est éliminée de manière hétérotrophe en réalisant une alimentation dans des conditions anoxiques, en utilisant la matière organique biodégradable disponible dans l'écoulement d'eaux usées.

19. Procédé selon la revendication 17, dans lequel la mesure des paramètres est enregistrée par un système de contrôle automatisé, lequel agit sur le temps de séjour hydraulique, l'introduction d'air/oxygène dans le réacteur et l'alcalinité à l'entrée du réacteur.

20. Procédé selon l'une quelconque des revendications précédentes, dans lequel l'écoulement d'eaux usées est un courant provenant d'un dispositif de digestion anaérobie.

21. Procédé selon la revendication précédente, dans lequel l'écoulement d'eaux usées correspond à un courant de drainage de suspension de la ligne de renvoi d'une station de purification d'une usine de traitement des eaux usées.

22. Procédé selon la revendication 20, dans lequel l'écoulement d'eaux usées correspond à l'effluent provenant d'un dispositif de digestion anaérobie appliqué à des eaux industrielles dans le secteur de la conserverie.
